(19) Europäisches Patentamt
European Patent Office
Office européen des brevets

(11) **EP 1 886 801 A1**

(12) **EUROPEAN PATENT APPLICATION**
published in accordance with Art. 153(4) EPC

(43) Date of publication:
**13.02.2008 Bulletin 2008/07**

(51) Int Cl.:
**B32B 9/00** (2006.01)   **B05D 3/04** (2006.01)
**B32B 7/02** (2006.01)

(21) Application number: **06746339.8**

(22) Date of filing: **12.05.2006**

(86) International application number:
**PCT/JP2006/309542**

(87) International publication number:
**WO 2006/129461 (07.12.2006 Gazette 2006/49)**

(84) Designated Contracting States:
**DE GB**

(30) Priority: **01.06.2005 JP 2005161076**
**23.06.2005 JP 2005183069**

(71) Applicant: **KONICA MINOLTA HOLDINGS, INC.**
**Tokyo 100-0005 (JP)**

(72) Inventors:
• **FUKUDA, Kazuhiro**
**Hino-shi,**
**Tokyo 191-8511 (JP)**

• **OZAKI, Koji**
**Hino-shi,**
**Tokyo 191-8511 (JP)**

(74) Representative: **Gille Hrabal Struck Neidlein Prop Roos**
**Patentanwälte**
**Brucknerstrasse 20**
**40593 Düsseldorf (DE)**

(54) **THIN FILM FORMING METHOD AND TRANSPARENT CONDUCTIVE FILM**

(57)    A method of forming a thin film comprising the steps of: applying an inorganic salt solution for a thin film on a substrate to obtain a coated inorganic salt solution film; and subjecting the coated inorganic salt solution film to a plasma treatment under atmospheric pressure, wherein the plasma treatment is conducted by supplying a gas under atmospheric pressure or nearly atmospheric pressure between a pair of counter electrodes, and then generating a high frequency electric field between the electrodes so as to excite the gas followed by subjecting the coated inorganic salt solution film to the excited gas.

# FIG. 2

EP 1 886 801 A1

**Description**

**TECHNICAL FIELD**

The present invention relates to a thin film forming method and a transparent conductive film formed thereby, the transparent conductive film exhibiting excellent light transmittance in the visible region and low electrical resistance.

**BACKGROUND**

There have been demanded methods of efficiently and inexpensively producing functional thin films such as electrode films, dielectric protection films, semiconductor films, transparent conductive films, electrochromic films, fluorescent films, superconductive films, dielectric films, solar cell films, reflection protecting films, anti-abrasion films, optical interference films, reflecting films, antistatic films, conductive films, anti-stain films, hard coat films, subbing films, barrier films, electromagnetic wave shielding films, infrared shielding films, ultraviolet absorbing films, lubricating films, shape memory films, magnetic recording films, emitting element films, biocompatible films, anti-corrosion films, catalytic films, gas sensing films, and decorative films.

Conventionally, these functional films have been formed via a wet film forming method represented by coating, or a vacuum film forming method such as a sputtering method, a vacuum deposition method, or an ion plating method, but there have been problems in compatibility of performance and cost. The inventors of the present invention have proposed that compatibility was able to be realized via an atmospheric pressure plasma method disclosed in WO 02/48428 pamphlet and Japanese Patent Publication Open to Public Inspection No. 2004-68143

However, it is desirable to further increase the yield in forming a thin film from a thin film forming material, and to further enhance its performance as a functional film.

In contrast, Patent Document 1 proposes a method wherein a solution of indium chloride and tin chloride is dip-coated on a substrate, followed by being fired to form a high-performance ITO film. This method, however, requires a firing temperature as high as 600 °C, and further only a highly heat-resistant substrate is employable.

Further, of the functional thin films described above, the transparent conductive films have conventionally been employed for products incorporating a transparent conductive film featuring low electrical resistance (low specific resistance) and high visible light transmittance. Examples of a wide variety of the application fields thereof include: transparent electrodes for flat display devices such as liquid crystal image display devices, organic electroluminescence (hereinafter referred to as "organic EL") image display devices, plasma display panels, or field emission displays; transparent electrodes for solar cells; electronic paper; touch panels; electromagnetic wave shielding materials; and infrared reflecting films.

Specifically, various investigations have been conducted to apply an organic EL image display device to a backlight for a liquid crystal display device, or to an illuminating light since the organic EL image display device is of a self-emitting type exhibiting low power consumption. However, a large emitting area tends to cause non-uniform emission due to resistance of the transparent conductive film. To overcome this problem, there has been demanded a transparent conductive film featuring low electrical resistance, that is, a surface resistance of at most 10 $\Omega/\square$, but preferably at most 5 $\Omega/\square$. Generally, while a thick transparent conductive film exhibits low resistivity, its light transmittance in the visible region decreases, which is a critical problem in display applications, resulting in incompatibility of low electrical resistance and enhanced visible light transmittance.

To overcome these problems, there has been disclosed a method of realizing low electrical resistance and improved visible light transmittance employing a laminate-structure composed of a metallic thin film such as silver element and an oxide transparent conductive film containing, e.g., tin-doped indium oxide, wherein the laminated film is further provided with an interference effect (for example, refer to Patent Document 2). However, a thin film prepared via the method disclosed in Patent Document 1 does not exhibit adequate quality in view of compatibility of low electrical resistance and enhanced visible light transmittance. Specifically, in applying this method to an organic EL image display device, since the emitting section is structured of a thin film, total reflection tends to occur at the interface between the metallic thin film and the oxide transparent conductive film, resulting in the problem of decreased emission efficiency.

In contrast, the transparent conductive film includes a composite oxide film incorporating an oxide or a dopant such as $SnO_2$, $In_2O_3$, $CdO$, $ZnO$, Sb-doped $SnO_2$, F-doped $SnO_2$, Al-doped $ZnO$, or Sn-doped $In_2O_3$. Of these, a tin-doped indium oxide (hereinafter referred to also as ITO) film is most widely utilized due to its excellent electrical properties and the ease of etching. However, transparent conductive films such as an ITO film have been formed mainly via a wet film forming method represented by coating, or a vacuum film forming method such as a sputtering method, a vacuum deposition method, or an ion plating method, as described above. A transparent conductive film exhibiting low electrical resistance can be prepared via the vacuum deposition method or the sputtering method, and an excellent conductive ITO film of a specific resistance of about 10 - 4 $\Omega\cdot$cm can be industrially prepared using a DC magnetron sputtering apparatus.

However, these physical film forming methods (PDV methods) allow a film to grow via deposition of the targeted substance onto a substrate in vacuum, which requires the use of a vacuum vessel, resulting in the necessity of a large and expensive apparatus and in low productivity due to poor efficiency of raw material usage, as well as in the difficulty of forming a large-surface film. Further, to obtain a low electrical resistance film, heating up to 200 - 300 °C is necessary during film formation, resulting in the difficulty of forming a transparent conductive film featuring low electrical resistance.

Further, a sol-gel method (being a wet method) necessitates many processes including a dispersion liquid preparation, coating, and drying, as well as the use of a binder resin due to low adhesion to the treated substrate, resulting in poor transparency. Still further, the produced transparent conductive film exhibits inferior electrical properties, compared to ones formed via the PVD method.

Further, a heating CVD method is a method of forming a film via heat decomposition of a vaporized raw material or of a raw material solution after being sprayed onto a substrate. While an apparatus used for this method has a simple structure and enables high productivity as well as the advantage of readily forming a large-surface film, there has been a problem in that usable substrates are limited due to the necessity of firing commonly at 400 °C - 500 °C as a heat treatment. Specifically, this has been the difficulty of forming a film on a plastic film substrate.

As described above, the inventors of the present invention have proposed that compatibility thereof was able to be realized via an atmospheric pressure plasma method disclosed in WO 02/48428 pamphlet and Japanese Patent Publication Open to Public Inspection No. 2004-68143. Specifically, in a transparent conductive film, however, it is desirable to further increase the yield of obtaining a thin film from a thin film forming material, and further it has been demanded that low electrical resistance and enhanced visible light transmittance exhibited by the transparent conductive film be further enhanced.

Patent Document 1: Japanese Patent Publication Open to Public Inspection No. 2002-175733

Patent Document 2: Japanese Patent Publication Open to Public Inspection No. 2005-93441

## DISCLOSURE OF THE INVENTION

## PROBLEMS TO BE SOLVED BY THE INVENTION

In view of the foregoing problems, the present invention was realized. An object of the present invention is to provide a thin film forming method of producing a high-performance thin film efficiently and even at low temperatures, and to provide a transparent conductive film exhibiting excellent light transmittance in the visible region and low electrical resistance, as well as being applicable to a large-surface organic EL element.

## MEANS TO SOLVE THE PROBLEMS

An object of the present invention was achieved employing the following embodiments:

(1) In a thin film forming method of forming a thin film by applying an inorganic salt-containing solution on a substrate, and then by subjecting the applied solution on the substrate to an atmospheric pressure plasma treatment, the thin film forming method is characterized by exposing the inorganic salt-containing solution applied on the substrate to an excited gas, wherein the atmospheric pressure plasma treatment is carried out by supplying the gas to a pair of opposed electrodes at or near atmospheric pressure to excite the gas by generating a high frequency electric field between the electrodes.

(2) The thin film forming method described in (1), wherein the gas contains nitrogen.

(3) The thin film forming method described in (1) or (2), wherein the gas contains nitrogen and at least either oxygen or hydrogen.

(4) The thin film forming method described in any one of (1) - (3), wherein droplets of the inorganic salt-containing solution are applied on a substrate.

(5) The thin film forming method described in (4), wherein the average particle diameter of the droplets is at most 5 $\mu$m.

(6) The thin film forming method described in (5), wherein the average particle diameter of the droplets is at most 1 $\mu$m.

(7) The thin film forming method described in any one of (1) - (6), wherein the atmospheric pressure plasma treatment is conducted by placing the substrate between the opposed electrodes.

(8) The thin film forming method described in any one of (1) - (7), wherein the frequency of the high frequency electric field is in the range of 800 kHz - 150 MHz.

(9) The thin film forming method described in any one of (1) - (8), wherein the inorganic salt is a metallic atom-containing compound.

(10) The thin film forming method described in (9), wherein the metallic atom-containing compound is a nitrate.

(11) The thin film forming method described in any one of (1) - (10), wherein a solution of the inorganic salt contains water.

(12) In a thin film forming method of forming a thin film by applying an inorganic salt-containing solution on a substrate, provided that the inorganic salt-containing solution has been subjected to an atmospheric pressure plasma treatment prior to applying on the substrate, wherein the atmospheric pressure plasma treatment is carried out by supplying a gas to a pair of opposed electrodes at or near atmospheric pressure to excite the gas by generating a high frequency electric field between the electrodes.

(13) The thin film forming method described in (12), wherein the gas contains nitrogen.

(14) The thin film forming method described in (12) or (13), wherein the gas contains nitrogen and at least either oxygen or hydrogen.

(15) The thin film forming method described in any one of (12) - (14), wherein droplets of the inorganic salt-containing solution are applied on a substrate.

(16) The thin film forming method described in (15), wherein the average particle diameter of the droplets is at most 5 $\mu$m.

(17) The thin film forming method described in (16), wherein the average particle diameter of the droplets is at most 1 $\mu$m.

(18) The thin film forming method described in any one of (12) - (17), wherein an atmospheric pressure plasma treatment is conducted by placing the substrate between the opposed electrodes.

(19) The thin film forming method described in any one of (12) - (18), wherein the inorganic salt is a metallic atom-containing compound.

(20) The thin film forming method de scribed in (19), wherein the metallic atom-containing compound is a nitrate.

(21) The thin film forming method described in any one of (12) - (20), wherein the inorganic salt-containing solution contains water.

(22) A transparent conductive film characterized by containing at least one of indium, tin, and zinc, wherein the transparent conductive film is formed via the thin film forming method described in any one of (1) - (11).

(23) A transparent conductive film characterized by containing at least one of indium, tin, and zinc, wherein the transparent conductive film is formed via the thin film forming method described in any one of (12) - (20).

(24) The transparent conductive film described in (22) or (23), wherein indium oxide, tin element, and silver element are contained therein.

(25) The transparent conductive film described in (24), wherein the silver element is uniformly present in an indium oxide-containing thin film.

(26) The transparent conductive film described in (25), wherein the content of the silver element is at most 30% by weight.

(27) The transparent conductive film described in (22) or (23), wherein the surface resistance is at most 10 $\Omega/\square$, and the average light transmittance in the wavelength region of 400 nm - 700 nm is at least 90%.

(28) The transparent conductive film described in (27), wherein the centerline average surface roughness Ra is at most 10 nm.

## EFFECTS OF THE INVENTION

According to the present invention, it is possible to provide a thin film forming method of producing a high-performance thin film efficiently and even at low temperatures, and to provide a transparent conductive film exhibiting excellent light transmittance in the visible region and low electrical resistance, as well as being applicable to a large-surface organic EL element.

## BRIEF DESCRIPTION OF DRAWINGS

Fig. 1 is a schematic view showing one example of an ultrasonic sprayer.
Fig. 2 is a schematic view showing one example of a sheet-feed atmospheric pressure plasma treatment apparatus.
Fig. 3 is a schematic view showing one example of a roll-type atmospheric pressure plasma treatment apparatus.
Fig. 4 is an over-all schematic view showing one example of another roll-type atmospheric pressure plasma treatment apparatus.
Fig. 5 is a figure showing one example of two types of droplet size distribution.
Fig. 6 is a structural schematic view showing one example of a droplet generator system.
Fig. 7 is a schematic view showing one example of a sputtering apparatus used to form laminated transparent conductive films as Comparative Examples.

**DESCRIPTION OF SYMBOLS**

1: ultrasonic sprayer
11: introducing pipe
12: raw material storage section
13: ultrasonic generator
14: power supply
15: discharging pipe
21: first electrode
22 and 32: second electrodes
22R and 35: rotating roll electrodes
25A and 25B: high frequency power supplies
26A and 26B: matching boxes
27A and 27B: filters
30 : atmospheric pressure plasma treatment apparatus
31 : atmospheric pressure plasma treatment vessel
32 and D: discharging spaces
36 : square envelope-shaped electrode
40 : electric field applying means
41 : first electrode
42 : second electrode
43 : first filter
44 : second electrode
50 : gas·droplet supplying means
51 : gas·droplet generating means
52: air inlet
53; exhaust outlet
60: electrode temperature adjusting means
64: guide roll
65: nip roll
68 and 69: dividing plates
A: spraying space
M: gas·droplets
F and S: substrates
G': treatment waste droplets
200: sputtering apparatus

**BEST MODE TO CARRY OUT THE INVENTION**

Initially, the inventors of the present invention have conducted diligent investigation and found that a thin film forming method of producing a high-performance thin film efficiently and even at low temperatures was realized by employing a thin film forming method wherein liquid containing a thin film forming material was applied on a substrate, followed by subjecting the applied liquid to an atmospheric pressure plasma treatment in a specific manner, as described in items (1) - (21).

Further, the inventors of the present invention have found that a thin film forming method of producing a high-performance thin film efficiently and even at low temperatures was realized by employing a thin film forming method wherein liquid containing a thin film forming material was subjected to an atmospheric pressure plasma treatment in a specific manner, followed by applying the liquid, having been subjected to the atmospheric pressure plasma treatment, on a substrate.

Still further, the inventors of the present invention have realized that a transparent conductive film was produced via the thin film forming methods, and have found that the following transparent conductive film exhibited excellent light transmittance in the visible region and low electrical resistance, as well as being applicable to a large-surface organic EL element: a transparent conductive film composed of a thin film exhibiting a surface resistance of at most 10 $\Omega/\square$ and an average light transmittance of at least 90% in the wavelength region of 400 nm - 700 nm, and specifically, the transparent conductive film, composed of the thin film containing indium oxide, tin element, and silver element, wherein the silver element was present uniformly.

The transparent conductive film of the present invention described in items (22) - (28) is characterized in that the thin film exhibits a surface resistance of at most 10 Ω/□, but preferably in the range of 1.0 Ω/□ - 10 Ω/□, more preferably 1.0 Ω/□ - 8.0 Ω/□. The surface resistance according to the present invention may be determined via any method known in the art, for example, a four-terminal method according to JIS-R-1673, specifically, for example, using Loresta-GP MCP-T600 (produced by Mitsubishi Chemical Corp.) as a measurement instrument.

Further, the transparent conductive film of the present invention is characterized in that the thin film exhibits an average light transmittance of at least 90% in the wavelength region of 400 nm - 700 nm. Herein, the upper limit of the average light transmittance is not specifically limited, since being limited to the constituent thin film materials themselves.

The average light transmittance in the present invention may be determined according to JIS R 1635, for example, using spectrophotometer Type IU-4000 (produced by Hitachi, Ltd.). Transmittances (%) were measured at 60 points at 5 nm regular intervals in the wavelength region of 400 nm - 700 nm, and then the average value of the transmittances at each of the selected wavelengths was calculated to obtain the average light transmittance.

Further, in the transparent conductive film of the present invention, the centerline average surface roughness Ra of the thin film is preferably at most 10 nm, more preferably in the range of 0.1 nm - 10 nm, still more preferably 0.1 nm - 2.0 nm from the view point of producing better effects of the present invention.

The centerline average surface roughness Ra (nm) according to the present invention is a value, obtained according to JIS B601, which represents the minute roughness state of a small area. In the present invention, a value obtained using an atomic force microscope (AFM) is utilized.

As such an atomic force microscope (Atomic Force Microscope: AFM), a SPI 3800N prove station and a SPA 400 multi-functional unit (produced by Seiko Instruments Inc.) are utilised. An about 1 cm square sample is placed on a horizontal sample setting table provided on a piezo scanner, and the cantilever is brought close to the sample surface so as to be in the interatomic force-affecting range. Then the sample surface is scanned in the X and Y directions while the surface roughness of the sample is detected via variation of the piezo element in the Z direction. As such a piezo scanner, one, capable of scanning in the range of 20 μm in the X and Y directions and of 2 μm in the Z direction, is utilized. As such a cantilever, silicon cantilever SI-DF 20, produced by Seiko Instruments Inc., featuring a resonance frequency of 120 - 150 kHz and a spring constant of 12 - 20 N/m, is utilized. Measurement is performed in the DFM (Dynamic Force Mode). A 2 μm square measuring area is measured via one or two viewing fields at a scanning frequency of 1 Hz.

When the roughness curve is defined as equation Y = F (X), provided that a portion of a length L to be measured is extracted from a roughness curve in the direction of its centerline; and the centerline direction of the extracted portion is set as the X-axis, with the longitudinal magnification direction (perpendicular to the X-axis) set as the Y-axis, the centerline average roughness (Ra) is expressed as follows:

$$Ra = \frac{1}{L} \int_0^L |F(X)| \, dX$$

The centerline average roughness (Ra) is obtained according to the defined equation.

According to the present invention, the transparent conductive film include a composite oxide film incorporating an oxide and a dopant such as $SnO_2$, $In_2O_3$, CdO, $ZnO_2$, $SnO_2$:Sb, $SnO_2$:F, ZnO:Al, or $In_2O_3$:Sn. In the present invention, it is preferable that a transparent conductive film composition be ITO ($In_2O_3$:Sn), ZnO, IZO ($In_2O_3$:ZnO), or FTO (F: $In_2O_3$), but ITO($In_2O_3$:Sn) is more preferable.

In the transparent conductive film of the present invention, specific methods of forming a thin film exhibiting the surface resistance and the average light transmittance defined above are not specifically limited. It is possible to form the film via the following methods; a method of forming a thin film containing tin-doped indium oxide (ITO) and silver element as constituent materials; a method of forming a thin film containing silver element, being distributed uniformly in the ITO film; and a method of forming a thin film containing silver element at the content of at most 30% by weight.

Herein, the state wherein the silver element is distributed uniformly in the ITO film as described above refers to one wherein when calculating the average silver element content in the ITO film, each of the silver element contents at the measured points is at mast ± 10% of the average silver content. Further, the silver element content is preferably in the range of 1% by weight - 30% by weight.

As a method of measuring the content and the distribution state of silver element in the ITO film, there are employed analytical methods known in the art, for example, a high-resolution transmission electron microscope and energy dispersive X-ray spectroscopic analyzer (EDS) "Voager."

After embedding a transparent conductive, film in an epoxy resin, being curable at room temperature, the transparent conductive film is cured at an ambient temperature of 40°C for two days, and thereafter the surface of the thus cured substance is smoothed using an ultramicrotome provided with a diamond knife.

A slice of the substance, cut out with the ultramicrotome, is mounted on a grid mesh covered with a micro-grid to prepare a sample to be observed. Subsequently, the structure and the distribution of each atom are measured using 200 kV electric field emission-type TEM "JEM-2010F" (produced by JEOL Ltd.) and energy dispersive X-ray spectroscopic analyzer (EDS) "Voager" (produced by ThermoNORAN). An example of the specific measurement conditions is shown below.

Accelerating voltage: 200 kV

TEM image observing magnification: 50000 - 500000 times

EDS measuring time (Live time): 50 sec

Measuring energy range: 0 - 2000 eV

The transparent conductive film of the present invention is formed via a thin film forming method, wherein the thin film is formed by subjecting liquid containing a thin film forming material, having been coated on a substrate, to an atmospheric pressure plasma treatment, which supplies gas between opposed electrodes at or near atmospheric pressure to generate a high frequency electric field between the electrodes, resulting in the excited gas, to which the liquid is exposed. The transparent conductive film of the present invention is also formed via a thin film forming method, wherein the thin film is formed by subjecting liquid containing a thin film forming material to an atmospheric pressure plasma treatment and thereafter the liquid, having been subjected to the atmospheric pressure plasma treatment, is applied onto a substrate, in which the atmospheric pressure: plasma treatment supplies gas between the opposed electrodes at or near atmospheric pressure to generate a high frequency electric field between the electrodes, resulting in the excited gas, to which the liquid is exposed. The thus prepared transparent conductive film exhibits the surface resistance and the average light transmittance specified above, as well as exhibiting low electrical resistance and being applicable to a large-surface organic EL element.

Further, in formation of the transparent conductive film via an atmospheric pressure plasma treatment described above, it is possible to produce better effects of the present invention under the following conditions: a metallic atom-containing compound is utilized as the thin film forming material; the metallic atom-containing compound is a nitrate; the liquid contains water; the gas to be excited contains nitrogen and at least either oxygen or hydrogen; droplets of the liquid is applied on the substrate; and the average particle diameter of the droplets is at most 5 $\mu$m, preferably at most 1 $\mu$m.

The thin film forming method with respect to items (1) - (21) and the transparent conductive film with respect to items (22) - (28) of the present invention will now be detailed.

(Atmospheric Pressure Plasma Treatment)

According to the present invention, an atmospheric pressure plasma treatment is one wherein gas is supplied between the opposed electrodes at or near atmospheric pressure to generate a high frequency electric field between the electrodes, resulting in the excited gas, to which liquid, containing the thin film forming material of the present invention, is exposed, whereby the liquid is activated to form a thin film on the substrate.

For use in an electrode, gas supplied between the electrodes, and a method of generating a high frequency electric field utilized in the atmospheric pressure plasma treatment, usable are any of those described in WO 02/48428 pamphlet and Japanese Patent Publication Open to Public Inspection No. 2004-68143.

Pressure at or near atmospheric pressure refers to one being approximately 20 - 110 kPa, preferably 93 - 104 kPa.

As the electrode, one obtained by coating a dielectric substance on a metallic base material is preferable. It is preferable that the dielectric substance be coated on at least either the electrode or the facing ground electrode, but coating of both of the electrode and the facing ground electrode with the dielectric substance is more preferable. The dielectric substance is preferably an inorganic compound featuring a specific dielectric constant of 6 - 45, and examples thereof include ceramics such as alumina or silicon nitride, or glass-lining materials such as silicate glass or borate glass.

In the present invention, the gas supplied between the electrodes contains at least a discharge gas. The discharge gas is one which is discharged via voltage application. The discharge gas includes nitrogen, a rare gas, air, hydrogen, and oxygen. These gases may be utilized individually or in combination. In the present invention, nitrogen is preferable as the discharge gas. It is preferable that 50 - 100% by volume of the discharge gas be nitrogen. In this case, it is preferable that a rare gas be contained, as a discharge gas other than nitrogen, at a ratio of less than 50% by volume of the mixed discharge gas. Further, it is preferable that the discharge gas be contained at a ratio of 90-99.9% by volume based on the total volume of the gas supplied into the discharge space.

The gas supplied between the electrodes may contain an additive gas to promote the reaction of forming a thin film in addition to the above discharge gases. Examples of the additive gas include oxygen, ozone, hydrogen peroxide, carbon dioxide, carbon monoxide, hydrogen, and ammonia. Of these, oxygen, carbon monoxide, and hydrogen are preferable, and any gases selected from these gases may be preferably mixed as the components. Further, it is preferable that the selected gas be contained at a ratio of 0.01 - 5% by volume based on the total volume of the gas, whereby the reaction may be promoted, resulting in forming a high-density and high-quality thin film.

The gas itself, supplied between the electrodes, is activated via voltage application to give excited gas. And then it is presumed that when liquid, containing the thin film forming material of the present invention, is exposed to the excited gas, the liquid is changed into a state wherein a thin film is formed on a substrate.

The high frequency electric field generated between the electrodes may be either an intermittent pulse wave or a continuous sine wave, but the continuous sine wave is preferable to produce better effects of the present invention.

The frequency of the high frequency electric field is preferably in the range of 100 kHz - 150 MHz.

Further, a power density supplied between the electrodes is preferably at least 1.0 W/cm$^2$, and the upper limit is preferably at most 50 W/cm$^2$, more preferably at most 20 W/cm$^2$.

Incidentally, when gas supplied between the electrodes contains nitrogen as the discharge gas, it is preferable that two kinds of high frequency electric fields be superposed due to the necessity of a, large intensity of the electric field to initiate discharge. In this manner, even when employing nitrogen as the discharge gas, high-density plasma may be generated, resulting in obtaining a high-quality thin film, and in conducting high-speed film formation, as well as further resulting in inexpensive and safe operations, and in reduced environmental load. Application of two kinds of the high frequency electric fields makes it possible to maintain a stable discharge state by satisfying the following relationships.

Namely, the frequency $\omega_2$ of a second high frequency electric field is higher than the frequency $\omega_1$ of a first one, and the relationship among the intensity $V_1$ of the first high frequency electric field, the intensity $V_2$ of the second one, and the intensity IV of a discharge initiating electric field satisfies the equation $V_1 \geq IV > V_2$ or $V_1 > IV \geq V_2$. Herein, the frequency of the first high frequency electric field is preferably at most 200 kHz. The lower limit thereof is preferably approximately 1 kHz. In contrast, the frequency of the second high frequency electric field is preferably at least 800 kHz. A higher frequency of the second high frequency electric field results in a higher plasma density, whereby a high-density and high-quality thin film may be produced. The preferable upper limit thereof is approximately 200 MHz.

In this manner, liquid, containing a thin film forming material, applied on a substrate or the liquid as such is activated via exposure to an electric field generated between the electrodes, resulting in a thin film formed on the substrate.

(Liquid Containing the Thin Film Forming Material)

The thin film forming material may be appropriately selected according to the type of a thin film to be formed. Examples of the thin film to be formed will now be shown; however the present invention is not limited thereto.

Electrode films: Au, Al, Ag, Ti, Ti, Pt, No, and Mo-Si
Dielectric protection films: $SiO_2$, SiO, $Si_3N_4$, $Al_2O_3$, $Al_2O_3$, and $Y_2O_3$
Transparent conductive films: $In_2O_3$ and $SnO_2$
Electrochromic films: $WO_3$, $IrO_2$, $MoO_3$, and $V_2O_5$
Fluorescent films: ZnS, ZnS+ZnSe, and ZnS+CdS
Magnetic recording films: Fe-Ni, Fe-Si-Al, $\nu$-$Fe_2O_3$, Co, $Fe_3O_4$, Cr, $SiO_2$, and $AlO_3$
Superconductive films: Nb, Nb-Ge, and NbN
Solar cell films: a-Si and Si
Reflection films: Ag, Al, Au, and Cu
Selective absorption film: ZrC-Zr
Selective transmission films: $In_2O_3$ and $SnO_2$
Anti-reflection films: $SiO_2$, $TiO_2$, and $SnO_2$
Shadow mask: Cr
Abrasion resistance films: Cr, Ta, Pt, TiC, and, TiN
Corrosion resistance films: Al, Zn, Cd, Ta, Ti, and Cr
Heat resistance films: W, Ta, and Ti
Lubricating film: $MoS_2$
Decorating films: Cr, Al, Ag, Au, TiC, and Cu

Herein, the degrees of nitriding, oxidation, sulfuration, and carbonization of the nitrides, oxides, sulfides, and carbides described above, respectively, are shown just as examples, and the composition ratios thereof to the metals may vary appropriately. Further, the thin film may contain impurities such as a carbon, nitrogen, and oxygen compounds in addition to the above metallic compounds.

As the thin film forming material for use in the present invention, metallic atom-containing compounds are preferable. The metallic atom-containing compounds include metallic salts, organic metallic compounds, metal halides, and metal hydrides.

Metals contained in the metallic salts, organic metallic compounds, metal halides, and metal hydrides include Li, Be, B, Na, Mg, Al, Si, K, Ca, Sc, Ti, V, Cr, Mn, Fe, Co, Ni, Cu, Zn, Ga, Ge, Rb, Sr, Y, Zr, Nb, Mo, Cd, In, Ir, Sn, Sb, Cs, Ba, La, Hf, Ta, W, Tl, Pb, Bi, Ce, Pr, Nd, Pm, Eu, Gb, Tb, Dy, Ho, Er, Tm, Yb, and Lu.

As the organic: metallic compounds, those represented by Formula (I) are exemplified.

$$\text{Formula (I)} \qquad R^1{}_x M R^2{}_y R^3{}_z$$

wherein M, $R^1$, and $R^2$ represent a metal, an alkyl group, and an alkoxy group, respectively; $R^3$ represents a group selected from a β-diketone complex group, a β-keto carboxylate complex group, a β-keto carboxylic acid complex group and a ketoxy group (a ketoxy complex group); and when the valence of the metal M is m, the following relationship is satisfied: $x + y + z = m$, wherein $x = 0 - m$, or $x = 0 - m - 1$; $y = 0 - m$; and $z = 0 - m$, each of x, y, and z being 0 or a positive integer. The alkyl group $R^1$ includes a methyl group, an ethyl group, a propyl group, and a butyl group. The alkoxy group $R^2$ includes, for example, a methoxy group, an ethoxy group, a propoxy group, a butoxy group, and a 3,3,3-trifluoropropoxy group. Further, a hydrogen atom of the alkyl group may be substituted with a fluorine atom. With respect to the group selected from the β-diketone complex group, the β-keto carboxylate complex group, the β-keto carboxylic acid complex group and the ketoxy group (the ketoxy complex group) represented by $R^3$, examples of the β-diketone complex group include, for example, 2,4-pentanedione (also called acetyl acetone or acetoacetone), 1,1,1,5,5,5-hexamethyl-2,4-pentanedione, 2,2,6,6-tetramethyl-3,5-heptanedione, 1,1,1-trifluoro-2,4-pentanedione; examples of the β-keto carboxylate complex group include methyl acetoacetate, ethyl acetoacetate, propyl acetoacetate, ethyl trimethylacetoacetate, and methyl trifluoroacetoacetate; examples of the β-keto carboxylic acid include acetoacetic acid, trimethylacetoacetic acid; and examples of the ketoxy group include an acetooxy group (or an acetoxy group), a propionyloxy group, a butylyloxy group, an acryloyloxy group, and a methacryloyloxy group. The carbon atom number of these groups is preferably at most 18. Further, these groups may be straight chained or branched, or the hydrogen atom thereof may be substituted with a fluorine atom. Of the organic metallic compounds, those containing at least one oxygen atom in the molecule are preferable. Preferable examples thereof include an organic metallic compound containing at least one alkoxy group represented by $R^2$ and a metallic compound containing at least one group selected from the β-diketone complex group, the β-keto carboxylate complex group, the β-keto carboxylic acid complex group and the ketoxy group (the ketoxy complex group) represented by $R^3$.

In the present invention, metallic salts are most preferable as the thin film forming material. Of the metallic salts, a nitrate is preferable. A high-purity nitrate is available, and the solubility thereof in water, serving as a preferable medium when in use, is high. Examples of the nitrate include indium nitrate, tin nitrate, zinc nitrate, and gallium nitrate.

As the thin film forming material used to form the transparent conductive film of the present invention, a metallic atom-containing compound is preferable. Examples of the metallic atom-containing compound include a metallic salt, an organic metallic compound, a metal halide, and a metal hydride, but specifically preferable examples of the organic metallic compound include the metallic compounds represented by Formula (I).

In formation of the transparent conductive film of the present invention, it is preferable that tin-doped indium oxide (ITO) and silver element be contained as constituent materials of the thin film. When forming the thin film incorporating these compositions, it is preferable to utilize a nitrate as the thin film forming material, and specifically indium nitrate, tin nitrate, and silver nitrate are preferable. Further, other examples of the thin film forming material include zinc nitrate and gallium nitrate.

In the present invention, a thin film forming material for use in the transparent conductive film is allowed to exist in liquid, serving as a medium, in a dissolved or dispersed state, but the dissolved state is preferable. As the medium, it is possible to utilize an organic solvent such as methanol, ethanol, isopropanol, butanol, or n-hexane; water; and a mixed solvent thereof. Water is preferable as the medium, and it is preferable that at least 50% by weight of the medium be composed of water.

In the present invention, liquid containing the thin film forming material is applied on a substrate, or supplied directly into the electric field between the electrodes.

In cases of application on the substrate, the liquid is applied in the form of a coating film by coating such as dipping, or droplets of the liquid are applied by spraying, but application in the form of droplets is preferable. Further, when the liquid is directly supplied into the electric field, the liquid is supplied in the form of droplets. From the viewpoint of plasma reactivity and productivity, the average particle diameter of the droplets is at most 5 μm, but is preferably at most 1 μm. A convenient measurement method of the average particle diameter of droplets is one, wherein particle distribution is calculated from the intensity distribution pattern of diffracted-scattered light emitted by irradiating a group of droplets with laser beams. For the above purpose, LDSA-1500A (produced by Tonichi Computer Applications Co., Ltd.) may be utilized.

A preferable method of forming the droplets will now be described.

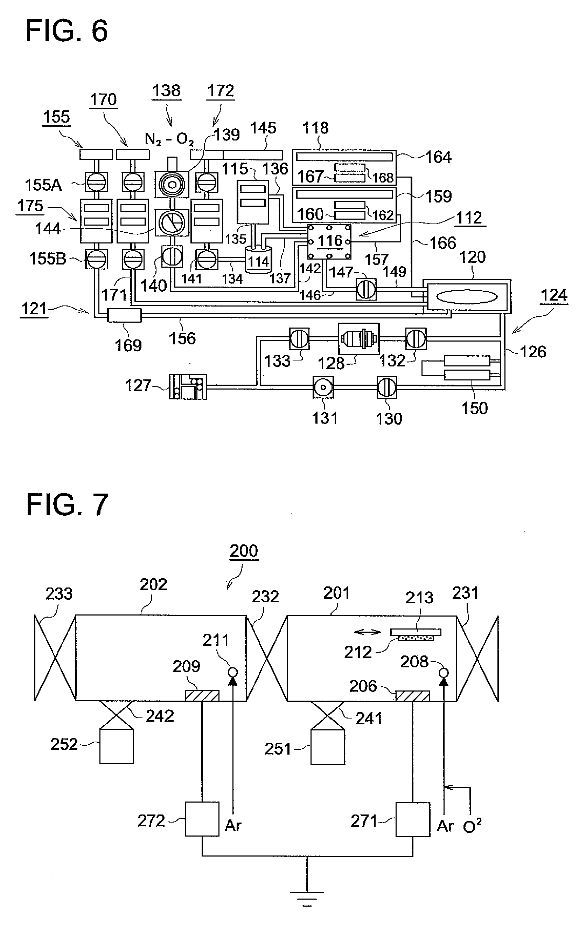

Fig. 6 is a structural schematic view showing a droplet-generating apparatus preferably utilized in the present invention.

A droplet generator system 112 is composed of a raw material storage section storing liquid containing the thin film forming material, that is, a pressurized reservoir 114, a mass flow rate-controlling device 115, a droplet generator 116, an accelerating system 118, and a charge neutralizing system 121.

A gas system 172 provides the pressurized reservoir 114 with pressurized gas, preferably dry nitrogen or other inert gases through a line 134 under adequate pressure in order to pressure-pump the liquid containing the thin film forming material from the pressurized reservoir 114 to the mass flow rate-controlling device 115. The pressurized reservoir 114 is pressurized by opening a valve 141. The pressurized reservoir 114 thus pressurized is connected to the mass flow rate-controlling device 115, which is connected to the droplet generator 116 via the line 136. The mass flow rate-controlling device 115 is capable of controlling the flow rate of the liquid containing the thin film forming material, which flows into the droplet generator 116, at a rate of about 0.05 - 1 cm$^3$/min. The liquid containing the thin film material moves to the droplet generator 116 through an entrance tube 136. A return tube 137 freely allows the liquid containing the thin film forming material, which has not formed into droplets or has aggregated, to return to the pressurized reservoir 114 from the droplet generator 116. In the preferred examples of the present invention, there remains a relatively small amount of the liquid containing the thin film forming material, which has not formed into droplets or has aggregated. Namely, the remaining amount is approximately 20% or at most 20% based on the total amount of the liquid containing the thin film material. Accordingly, no aggregate is reused, but the aggregate is easily disposed of by purging the droplet generator 116 after adhesion, resulting in disappearance of the potential problem of the increase in the viscosity of the liquid containing the thin film material. Subsequently, by opening the valves 139 and 140, pressurized gas is passed to the droplet generator 116 through a gas line 142. The gas pressure, in the line 142 is automatically adjusted to the predetermined pressure. This pressure is preferably 2.76 x 10$^5$ - 5.52 x 10$^5$ Pa, more preferably 4.14 x 10$^5$ Pa. It is preferable that the gas be a mixture of an inert gas such as dry nitrogen and a gas readily ionized, preferably oxygen or carbon dioxide, but a mixture containing oxygen is more preferable. Adding oxygen increases charge of the droplets. Oxygen is readily ionized and then gas particles continuously collide in the gas at room temperature, whereby charge is transferred to the liquid droplets. The content of oxygen in the gas is preferably 1 - 15% by volume, more preferably 5 - 10% by volume. In the process of the preferred examples, a mixture of 95% dry nitrogen and 5% oxygen was utilized.

Further, by opening a valve 147, droplets generated in the droplet generator 116 may be supplied onto a substrate in a chamber 120 of the atmospheric pressure plasma apparatus through a line 149.

The process is further detailed below. Voltage application covers the droplets with an electric filter or charges the droplets, or being capable of carrying out both of the Operations. Voltage applied to the droplet generator system 112 is automatically controlled to the predetermined voltage via a power generator 159. Similarly, the charged particles are accelerated in the chamber 120 of the atmospheric pressure plasma apparatus by the voltage, applied via an electric cable 166 from a power supply 164. The accelerating voltage, is automatically controlled via the power supply 164. Voluntarily, a charge neutralizer system 121 generates particles with a reversed polarity to that of the droplet particles adhering to the substrate. The charge neutralizer system incorporates an ionized particle source 169. After opening a supply valve 155A, by computer-controlling a valve 155B of a gas system 155, a gas flow, which passes through the ionized particle source 169 and a gas line 156, is generated and then the ionized particles are introduced into the chamber, which allows the ionized particles to move to the substrate. Further, by use of the gas system 155, dry nitrogen may be allowed to move to the bottom of the substrate so as for the liquid containing the thin film material not to adhere to the bottom of the substrate. The gas system 155 may be further controlled to supply additional dry nitrogen or other inert gases into the chamber 120 via the gas line 156. This process is carried out in case of the necessity of maintaining the pressure at the desired level. When it is necessary to promote the charging of the droplets, additional oxygen or carbon dioxide may be added.

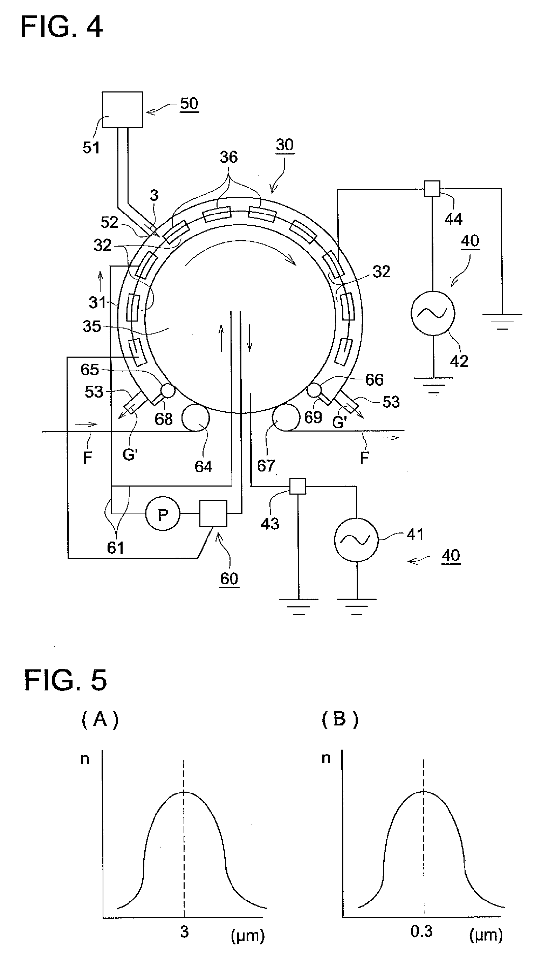

Producing the droplets in this manner makes it possible to form minute droplets featuring a very small particle diameter shown in Fig. 5(B).

(Substrates)

A substrate utilized in the present invention is described.

The substrate utilized in the present invention is not specifically limited, provided that a thin film in the flat form, such as a plate, sheet, or film, or a thin film in the three-dimensional form, such as a lens, is formed on the substrate. The shape and material of the substrate is not limited, provided that a uniform thin film is formed via exposure of the substrate to mixture gas plasma, wherein the substrate is either in a stationary state or in a transfer state. The shape of the substrate is either flat or three-dimensional, and the flat-shaped substrate includes a glass sheet, and a resin film. With respect to the material, various substances such as glass, a resin, pottery, metal, and a non-metallic material are utilized. Specifically, examples of the glass include a glass sheet and a lens, and those of the resin include a resin lens, a resin film, a resin sheet, and a resin plate.

A resin film is suitably applied to a continuous and highly productive production method due to the following reason: since a transparent conductive film can be formed on a resin film which is transferred between or near the electrodes of the atmospheric pressure plasma apparatus of the present invention, the resin film is suitable for mass production, which is not a batch one such as a vacuum system including sputtering.

Examples of materials for use in molded substances such as a resin film, resin sheet, resin lens, and resinous molded article include a cellulose ester such as cellulose triacetate, cellulose diacetate, cellulose acetate propionate, or cellulose acetate butyrate, a polyester such as polyethylene terephthalate or polyethylene naphthalate, a polyolefin such as polyethylene or polypropylene, as well as polyvinylidene chloride, polyvinyl chloride, polyvinyl alcohol, ethylenevinyl alcohol copolymer, syndiotactic polystyrene, polycarbonate, norbornene resin, polymethylpentene, polyether ketone, polyimide, polyethersulfone, polysulfone, polyetherimide, polyamide, fluorine resin, polymethyl acrylate, and acrylate copolymer.

These materials may be utilized individually or in combination. Of these, there are preferably utilized those available on the market such as ZEONEX and ZEONOA (produced by Zeon Corp.), ARTON, being an amorphous cyclopolyolefin resin (produced by JSR Corp.), PURE-ACE, being a polycarbonate film (produced by Teijin Ltd.), or KONICA TAC KC4UX and KC8UX (produced by Konica Minolta Opto, Inc.). Further, even a material, exhibiting a large intrinsic double refractive index, such as polycarbonate, polyarylate, polysulfone, or polyethersulfone may be utilized to produce a usable substrate, provided that conditions for the solution casting film formation or melt extrusion film formation, as well as for stretching longitudinally and laterally are appropriately get.

Of these, a cellulose ester film, being optically near-isotropic, is preferably utilized for use in an optical element. Preferable examples of the Cellulose ester film include cellulose triacetate film and cellulose acetate propionate, as described above. As the cellulose triacetate film, KONICA TAC KC4UX, available on the market, is useful.

It is possible to utilize those prepared by coating gelatin, polyvinyl alcohol, an acrylic resin, a polyester resin, or a cellulose ester resin on any of these resins. Further, an anti-glare layer, a clear hard coat layer, a barrier layer, or an anti-stain layer may be formed on the thin film side of these resin films. Still further, an adhesion, layer, an alkali barrier coat layer, a gas barrier layer, or a solvent resistant layer may be formed, as appropriate.

Further, the substrate of the present invention is not limited to those described: above. The film thickness of the film substrate, is preferably in the range of 10 - 1000 $\mu$m, but is more preferably 40 - 200 $\mu$m.

(Atmospheric Pressure Plasma Treatment Apparatus)

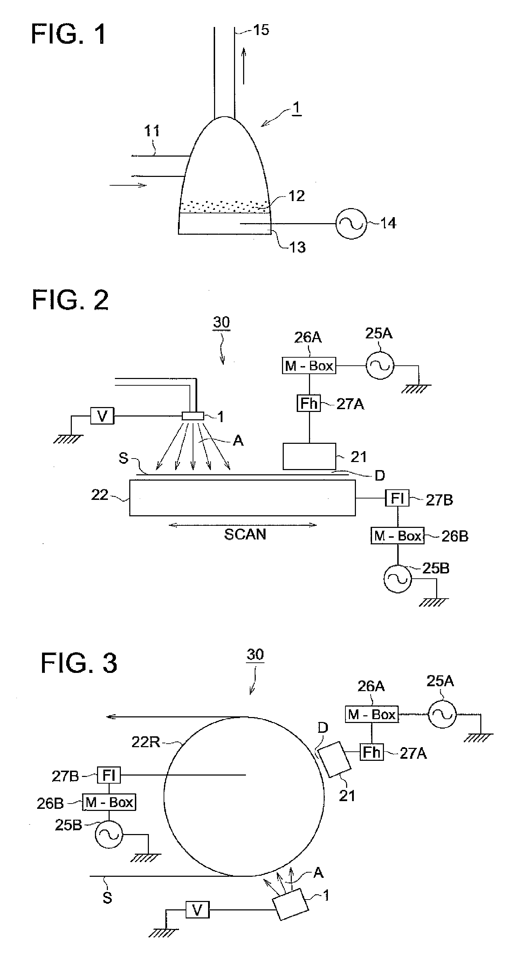

Now, the atmospheric pressure plasma treatment apparatus used in the present invention is described by referring to Fig. 1 - Fig. 4. Herein, the embodiments of the present invention are not limited thereto.

Fig. 1 is a schematic view showing an ultrasonic sprayer used when droplets of liquid containing the thin film forming material are applied on a substrate or supplied between the electrodes. Herewith, it is possible to form minute droplets (hereinafter referred to simply as droplets). In Fig. 1, symbol 1 is an ultrasonic sprayer; symbol 11 is a introducing pipe introducing nitrogen; symbol 12 is a raw material storage section storing a liquid L containing the thin film forming material, being a droplet raw material; symbol 13 is an ultrasonic generating section; symbol 14 is a power supply connected to the ultrasonic generating section 13; and symbol 15 is an discharge pipe discharging generated droplets. Nitrogen is introduced into the raw material storage section 12 from the introducing pipe 21 and ultrasonic waves are generated from the ultrasonic generating section 13 by switching on the power supply 14, whereby droplets are generated. The droplets generated in this manner are discharged outside of the ultrasonic sprayer 1 through the discharge pipe 15, and thereafter the droplets are sprayed from an appropriate point of the atmospheric pressure plasma treatment apparatus (not shown).

Fig. 2 is a schematic view showing a sheet-feed atmospheric pressure plasma treatment apparatus provided with an ultrasonic sprayer. In Fig. 2, symbol 1 is the same ultrasonic sprayer as in Fig. 1. Droplets M, having been sprayed downward from the ultrasonic sprayer 1, are applied onto a substrate S. Symbol 21 is a first electrode fixed and symbol 22 is a second electrode being capable of performing repetitive movements in the direction of the arrow shown in the figure while supporting the substrate S. The first electrode 21 and the second electrode 22, facing each other, are arranged so that the predetermined gap is created between the electrodes. This gap constitutes a discharge space D. The first electrode 21 and the second electrode 22 are connected to a group of loads, Which are filters 27A and 27B, matching boxes 26A and 26B, and high frequency power supplies 25A and 25B, respectively, and are connected to ground. The filters, functioning to superpose two individual high frequency electric fields in the discharge space, are inserted so as for each of the high frequency waves not to affect its corresponding power supply. Further, the matching boxes are inserted to correct impedance levels by canceling reactance components possessed by the loads to effectively utilize energy generated by the high frequency power supplies.

The first high frequency electric field generated by the high frequency power supply 25A and the second high frequency electric field generated by the high frequency power supply 25B satisfy the following relationship: the frequency $\omega_2$ of the second high frequency electric field is higher than the frequency $\omega_1$ of the first high frequency electric field, and the relationship among the intensity $V_1$ of the first high frequency electric field, the intensity $V_2$ of the second high frequency electric field, and the intensity IV of the discharge initiating electric field satisfies the following equation $V_1 \geq IV > V_2$ or $V_1 > IV \geq V_2$. As described above, a stable and high-density discharge state may be achieved by superposing two kinds of the high frequency electric fields satisfying the relationship, even when employing gas such as nitrogen featuring a high intensity of the discharge initiating electric field, resulting in high-quality film production.

For example, a high frequency of a 100 kHz frequency is employed for the first high frequency electric field, and a high frequency of a 13.56 MHz frequency is employed for the facing second high frequency electric field. A discharge space is created between the electrodes by introducing a mixture gas of nitrogen and 0.1% and 1% by volume of oxygen and hydrogen, respectively, based on nitrogen.

The substrate S such as glass, placed on the second electrode 22, moves repetitively between a spraying space A and a discharge space D. Droplets of the liquid containing the thin film forming material are applied on the substrate S in the spraying space A. In the discharge space D, a discharge gas such as nitrogen is supplier and two kinds of the high frequency electric fields are superposed, resulting in generating high-density plasma, to which the substrate S, on which the droplets have been applied, is exposed. Repeating the above process forms a thin film.

Fig. 3 is a schematic view showing a roll-type atmospheric pressure plasma treatment apparatus provided with an ultrasonic sprayer. In Fig. 3, those, designated by the same reference symbols as in Fig. 2, are the same members as described in Fig. 2. In Fig. 3, symbol S is a long-length substrate such as a plastic film. The substrate S, wound around a roll electrode 22R, being a second electrode, is transported in the direction of the arrow in the figure. Droplets M containing the thin film forming material, to be sprayed from an ultrasonic sprayer 1, are applied on the substrate S in a spraying space A. And thereafter a thin film is formed while the substrate S passes through a discharge space D created between the first electrode 21 and the second electrode 22R.

Fig. 4 is a schematic view showing another type of atmospheric pressure plasma treatment apparatus usable in the present invention. In Fig. 4, an atmospheric pressure plasma treatment apparatus 30 is one provided with an electric field applying means 40, a gas-droplet supplying means 50, and an electrode temperature adjusting means 60.

A mixture MG of minute droplets (referred to simply as droplets) containing the thin film forming material supplied from the gas-droplet supplying means 50 and nitrogen, being a discharge gas, is supplied between the opposed electrodes (the discharge space) 32, composed of a roll electrode (a first electrode) 35 and plural square envelop-shaped electrodes (second electrodes) 36, whereby the mixture MG is activated to form a thin film via deposition onto a substrate F.

In the discharge space (between the opposed electrodes) 32 between the rotating roll electrode (the first electrode) 35 and the square envelop-shaped electrodes (the second electrodes) 36, a first high frequency electric field, featuring an $\omega_1$ frequency, a $V_1$ electric field intensity, and an $I_1$ current, is applied to the rotating roll electrode (the first electrode) 35 from a first power supply 41, and a second high frequency electric field, featuring an $\omega_2$ frequency, a $V_2$ electric field intensity, and an $I_2$ current, is applied to the square envelop-shaped electrodes (the second electrodes) 36 from a second power supply 42.

A first filter 43 is placed between the rotating roll electrode (the first electrode) 35 and the first power supply 41, wherein the first filter 43 is designed to easily pass current from the first power supply 41 to the first electrode, and to make it hard for current to pass from the second power supply 42 to the first power supply by grounding the current from the second power supply 42. Further, a second filter 44 is placed between the square envelop-shaped electrodes (the second electrodes) 36 and the second power supply 42, wherein the second filter 44 is designed to easily pass current from the second power supply 42 to the second electrodes, and to make it hard for current to pass from the first power supply 41 to the second power supply by grounding the current from the first power supply 41.

Incidentally, in the present invention, it is possible to utilize the rotating roll electrode 35 as a second power supply, and to utilize the square envelop-shaped electrode as a first electrode. In either case, the first and second electrodes are connected to the first and second power supplies, respectively. It is preferable to apply a higher intensity of the high frequency electric field from the first power supply, compared to the second power supply (namely $V_1 > V_2$). Herein, the frequency satisfies equation $\omega_1 < \omega_2$.

Further, it is preferable that the current satisfies equation $I_1 < I_2$. The current $I_1$ of the first high frequency electric field is preferably 0.3 - 20 mA/cm$^2$, more preferably 1.0 - 20 mA/cm$^2$. And also the current $I_2$ of the second high frequency electric field is preferably 10 - 100 mA/cm$^2$, more preferably 20 - 100 mA/cm$^2$.

In the gas·droplet supplying means 50, the gas·droplets MG, generated by a gas·droplet generator 51, are introduced into an atmospheric pressure plasma treatment vessel 31 through an air inlet 52 by controlling the flow.

The substrate F is transported after unwound from a master roll (not shown) or transported from the previous stage, and via a guide roll 64, transported to a nip roll 65, which shields air accompanied with the substrate F. And thereafter the substrate F is transferred between the rotating roll electrode 35 and the square envelop-shaped electrodes 36 while rotated in contact with the rotating roll electrode 35, wherein an electric field is applied from both the rotating roll electrode (the first electrode) 35 and the square envelop-shaped electrodes (the second electrodes) 36, whereby discharge plasma is generated between the opposed electrodes (the discharge space) 32. The substrate F is then formed into a thin film, wherein the substrate F, wound on the rotating roll electrode 35, is exposed to gas in the plasma state while rotated. The substrate F is wound by a winder or transferred to the following stage via a nip roll 66 and a guide roll 67.

Treatment waste droplets G', having been discharge-treated, are exhausted from an exhaust outlet 53.

During thin film formation, in order to heat or cool the rotating roll electrode (the first electrode) 35 and the square envelop-shaped electrodes (the second electrodes) 36, temperature is adjusted from the inside of the electrodes by transferring a medium, the temperature of which has been adjusted by an electrode temperature adjusting means 60, to both of the electrodes via a pipe 61 using a solution sending pump 61. Incidentally, symbols 68 and 69 are dividing plates functioning to divide the atmospheric pressure plasma treatment vessel 31 from the exterior.

Each of the square envelop-shaped electrodes 36 may be exchanged with a cylindrical electrode, but the square envelop-shaped electrodes produce the effect of further expanding the discharge range (the discharge area), compared to the cylindrical electrode, whereby the square envelop-shaped electrodes are preferably utilized in the present invention.

When a dielectric substance is formed on one of the electrodes, the inter-electrode distance between the first and second electrodes, facing each, refers to the shortest distance between the surface of the dielectric substance and that of a conductive metallic base material of the other electrode. When the dielectric substance is formed on both of the electrodes, the inter-electrode distance refers to the shortest distance between both surfaces of the dielectric substance. The inter-electrode distance is determined in consideration of the thickness of the dielectric substance formed on the conductive metallic base material, the intensity of an applied electric field, and the object of using plasma, but in any case, the inter-electrode distance is preferably 0.1 - 20 mm, more preferably 0.5 - 2 mm from the viewpoint of conducting uniform discharge.

For the atmospheric pressure plasma treatment vessel 31, a treatment vessel made of PYREX (a trademark) glass is preferably employed, but a metallic vessel may be utilized, provided that insulation is ensured between the electrodes. For example, insulation may be ensured either via adhesion of a polyimide resin to the inside of a frame made of aluminum or stainless steel or by spraying ceramics on the metallic frame.

As the first power supply (being a high frequency power supply) equipped in the atmospheric pressure plasma treatment apparatus, any of the following products available on the market may be preferably utilized:

| Applying Power Supply Symbol | Manufacturer | Frequency | Product Name |
|---|---|---|---|
| A1 | Shinko Electric- Co., Ltd. | 3kHz | SPG3-4500 |
| A2 | Shinko Electric Co., Ltd. | 5kHz | SPG5-4500 |
| A3 | Kasuga Electric Works Ltd. | 15kHz | AGI-023 |
| A4 | Shinko Electric Co., Ltd. | 50kHz | SPG50-4500 |
| A5 | Haiden Laboratory Inc. | 100kHz* | PHF-6k |
| A6 | Pearl Kogyo Co., Ltd. | 200kHz | CF-2000-200k |
| A7 | Pearl Kogyo Co. Ltd. | 400kHz | CF-2000-400k |

Further, as the second power supply, any of the following products available on the market may be preferably utilized:

| Applying Power Supply Symbol | Manufacturer | Frequency | Product Name |
|---|---|---|---|
| B1 | Pearl Kogyo Co., Ltd. | 800kHz | CF-2000-800k |
| B2 | Kogyo Co., Ltd. | 2MHz | CF-2000-2M |
| B3 | Pearl Kogyo Co., Ltd. | 13.56MHz | CF-5000-13M |
| B5 | Pearl Kogyo Co., Ltd. | 27MHz | CF-2000-27M |
| B6 | Pearl Kogyo Co., Ltd. | 150MHz | CF-2000-150M |

Herein, of the above power supplies, the asterisk means an impulse high frequency power supply (100 kHz in a continuous mode) produced by Haiden Laboratory Inc. The other power supplies listed are high frequency power supplies capable of supplying continuous sine waves only.

In the present invention, it is preferable to employ an electrode capable of maintaining a uniform and stable discharge state by applying such an electric field.

In the present invention, with respect to a power applied between the opposed electrodes, a power (namely a power density) of at least 1 $W/cm^2$, is supplied to the second electrode (the second high frequency electric field), whereby a discharge gas is activated to generate plasma, resulting in giving energy to thin film forming droplets to form a thin film. The upper limit of the power supplied to the second electrode is preferably 50 $W/cm^2$, more preferably 20 $W/cm^2$.

The lower limit is preferably 1.2 W/cm$^2$. Herein, a discharge area (cm$^2$) refers to an area of the range of the electrode on which discharge occurs.

Further, supplying a power (a power density) of at least 1 W/cm$^2$ to the first electrode (the first high frequency electric field) makes it possible that the power density increases as uniformity of the second high frequency field is maintained. Herewith, more uniform high-density plasma may be generated, resulting in increased film forming speed and enhanced film quality simultaneously. The power supplied to the first electrode is preferably at least 5 W/cm$^2$, and the upper limit thereof is preferably 50 W/cm$^2$.

Herein, the waveform of the high frequency electric field is not specifically limited. Either a continuous oscillation mode (called a continuous mode) with a continuous sine wave or an intermittent oscillation mode (called a pulse mode) performing: on-off operations intermittently may be employed, but the continuous sine wave is preferable at least for the second electrode (the second high frequency electric field) to obtain a high-density and high-quality film.

**EXAMPLES**

The present invention is detailed with reference to examples below, but is not limited thereto. Incidentally, "%" shown in the examples refers to "% by weight", unless otherwise specified.

Example 1 (An example for items (1) - (21) described above).

<Preparation of Thin Film 1>

(Preparation of Liquid Containing the Thin Film Forming Material)

A solution containing 0.05 mol% of indium nitrate and 0.02 mol% of tin nitrate was prepared.

(Preparation of Droplets)

Using the ultrasonic sprayer 1 shown in Fig. 1, the droplets M were prepared from liquid (a droplet raw material L) containing the thin film forming material, having been prepared, at 25 °C. Herein, the frequency of the ultrasonic sprayer was 2 MHZ, the flow rate of nitrogen was 10 l/min, and the set temperature was 80 °C.

(Spraying Droplets on the Substrate, Formation of Plasma)

Using the atmospheric pressure plasma treatment apparatus shown in Fig. 3, the droplets were sprayed on the substrate S (polyethersulfone film) by applying a direct current electric field of + 1 kV to the feed opening. In the atmospheric pressure plasma treatment apparatus shown in Fig. 3, a high frequency power supply of a 100 kHz frequency is connected to the electrode 22R holding the substrate S, and a high frequency power supply of a 13.56 MHz frequency is connected to a facing rod electrode 21 and also a matching box, functioning to match impedance, is connected between the power supply body and the rod electrode. Further, a filter is placed between the matching box and the electrode to restrict current flow from the former to the latter, or vice trersa. Discharge was formed by introducing a mixture gas of nitrogen and 0.1% and 1% by volume of oxygen and hydrogen, respectively, based on nitrogen into the discharge space D. Since the portion exposed to plasma gas is located in the downstream of the spraying space A, the sprayed droplets are exposed to the plasma gas just after being sprayed.

Herein, the power density of the high frequency power supply of a 100 kHz frequency was 3 W/cm$^2$, and the power density of the high frequency power supply of a 13.56 MHz frequency was set to 5 W/cm$^2$.

This thin film forming method is one wherein liquid containing the thin film forming material is applied on a substrate and then the liquid is subjected to an atmospheric pressure plasma treatment.

Incidentally, the electrode 22R holding the substrate S during film formation was kept warm at 150 °C.

(Measurement of Particle Size Distribution of Droplets)

Using Spraytec series OPTICS/RTS5113 (produced by Sysmex Corp.), particle size distribution of the droplets was measured in the air at a height of 30 mm above the substrate. The particle size distribution is shown in Fig. 5(A).

<Preparation of Thin Film 2>

Thin Film 2 was prepared in the same manner as in preparation of Thin Film 1 except that droplets were prepared using the atomizing unit of an atomizing apparatus (a Liquid Source Misted Chemical Deposition (LSMCD) apparatus, produced by Primaxx, Inc.) instead of the ultrasonic sprayer shown in Fig. 1, and the droplet output port of the apparatus was connected to the output port having been connected to the ultrasonic sprayer (not shown). Further, particle size distribution of the droplets was measured in the same manner as for Thin Film 1. The particle size distribution is shown in Fig. 5(B).

This thin film forming method is one wherein liquid containing the thin film forming material is applied onto a substrate and then the liquid is subjected to an atmospheric pressure plasma treatment.

<Preparation of Thin Film 3>

Thin Film 3 was prepared in the same manner as in preparation of Thin Film 1 except that the atmospheric pressure plasma treatment apparatus 30 shown in Fig. 4 was utilized instead of the atmospheric pressure plasma treatment apparatus shown in Fig. 3.

Herein, the high frequency power supply of a 100 kHz frequency is connected to the roll electrode 35. The high frequency power supply of a 13.56 MHz frequency is connected to each of the cylindrical electrodes 36, facing the roll electrode, and also a matching box, functioning to match impedance, is connected between the power supply body and the electrodes. Further, a filter is placed between the matching box and the electrodes to restrict current flow from the former to the latter, or vice versa. Then, discharge was formed by introducing a mixture gas of nitrogen and 0.1% and 1% by volume of oxygen and hydrogen, respectively, based on nitrogen between the electrodes. In this treatment apparatus, droplets 3 containing the thin film forming material are changed into plasma gas 32 via an atmospheric pressure plasma treatment and then applied on a substrate to form a thin film.

Incidentally, the power density of the high frequency power supply of a 100 kHz frequency was 3 W/cm$^2$, and the power density of the high frequency power supply of a 13.56 MHz frequency was set to 5 W/cm$^2$.

This thin film forming method is one wherein liquid containing the thin film forming material is subjected to an atmospheric pressure plasma treatment and thereafter the liquid have been subjected to the atmospheric pressure plasma treatment is applied on a substrate.

The electrode 35 holding the substrate 5 during film formation was also kept warm at 150 °C in this case.

<Preparation of Thin Film 4>

Indium chloride (InCl$_3$·3.5H$_2$O, purity: 99.8%, produced by Kojundo Chemical Laboratory Co., Ltd.) and stannous chloride (SnCl$_2$·2H$_2$O, purity: 99.9%, produced by Kojundo Chemical Laboratory Co., Ltd.) as an inorganic tin compound were dissolved in 50 ml of alcohol and stirred for 5 hours, wherein the total metallic, component is allowed, to be approximately 0.1 mol/l and the tin concentration in the metallic component is allowed to be 5 at%. About 2.5 g/l of Pepole BS-184 (being polyalkylene glycol-based, produced by Toho Chemical Industry Co., Ltd.) was added to the resultant solution, followed by being mixed and dissolved to give a coating liquid for thin film formation.

A Corning #7059 glass substrate was subjected to ultrasonic cleaning in a cleaning agent (Semico Clean 56, produced by Furuuchi Chemical Corp.) for 10 min, followed by being washed with ion-exchanged water several times. Subsequently, after being kept in boiling acetone for 10 min, the resultant was pulled out for air-drying. The cleaned glass substrate was immersed in the coating liquid for thin film formation and thereafter pulled out for coating. Then, the coated substrate was fired in a box furnace (in the atmosphere) at 600 °C for 30 min, and then heated in a cylindrical furnace (in nitrogen) up to 600 °C at a rate of 10 °C/min, followed by being allowed to stay at this temperature for an hour.

This immersing·coating-firing was repeated ten times to prepare Thin Film 4.

<Preparation of Thin Film 5>

Using the same coating liquid and cleaned substrate as used in preparation of Thin Film 4, the cleaned substrate was similarly immersed in the coating liquid for thin film formation and thereafter pulled out for coating. Subsequently, before being dried, the coated surface was treated using the sheet-feed atmospheric pressure plasma treatment apparatus shown in Fig. 2. In this case, no droplets were sprayed on the substrate . A mixture gas of nitrogen and 0.1% and 1% by volume of oxygen and hydrogen, respectively, based on nitrogen, was introduced between the electrodes. A high frequency power supply of a 100 kHz frequency was connected to a stage electrode 22, and a high frequency power supply of a 13.56 MHz frequency was connected to the facing cylindrical electrode 21 and also a matching box, functioning to match impedance, was connected between the power supply body and the electrode. Further, a filter was placed between the matching box and the electrode to restrict current flow from the former to the latter, or vice versa, and discharge was formed by applying an electric field between the electrodes.

Incidentally, the power density of the high frequency power supply of a 100 kHz frequency was 3 W/cm$^2$, and the power density of the high frequency power supply of a 13.56 MHz frequency was set to 5 W/cm$^2$.

This immersing·coating-atmospheric pressure plasma treatment was repeated ten times to prepare Thin Film 5.

Herein, the electrode 22 holding the glass substrate during film formation was kept warm at 150 °C.

<Preparation of Thin Film 6>

Thin Film 6 was prepared in the same manner as in preparation of Thin Film 4 except that the firing temperature was 200 °C.

<Evaluation>

The following evaluation was carried out on the thin films obtained. The results are listed in Table 1.

(Surface Specific Resistance)

According to JIS R 1637, surface specific resistance ($\Omega \cdot cm$) was determined via a four-terminal method. Herein, measurement was performed using Loresta-GP MCP-T600 (produced by Mitsubishi Chemical Corp.).

(Transmittance)

According to JIS R 1635, transmittance (%) was measured at a 550 nm wavelength using spectrophotometer Type 1U-4000 (produced by Hitachi, Ltd.).

(Surface Roughness)

Centerline average surface roughness (nm) ruled by JIS B 0601 was measured.

(Adhesion)

A cross-cut adhesion test based on JIS K 5400 was conducted. Cross-cuts of 11 lines of an interval of 1 mm perpendicular to the surface of a formed thin film were formed on the thin film in the transverse and longitudinal directions with a single-edged razor to form one hundred 1 mm square grids. Then, a cellophane tape available on the market was allowed to adhere to the cross-cut surface, and the tape was perpendicularly peeled off from one end by hand. The ratio (%) of the unpeeled film area to the area of the tape allowed to adhere to the cross-cut lines was measured to evaluate adhesion.

(Raw Material Yield)

The ratio (%) of a thin film forming material formed on the substrate to the thin film forming material supplied was calculated in terms of the metal.

Table 1

| Thin Film No. | Thin Film Forming Method | Surface Specific Resistance ($\Omega \cdot cm$) | Transmittance (%) | Surface Roughness (nm) | Adhesion (%) | Raw Material Yield (%) | Remarks |
|---|---|---|---|---|---|---|---|
| 1 | Mist, Atmospheric Pressure Plasma Method | $3 \times 10^{-4}$ | 87 | <10 | 100 | 75 | Present Invention |
| 2 | Mist, Atmospheric Pressure Plasma Method | $2 \times 10^{-4}$ | 88 | <3 | 100 | 72 | Present Invention |

(continued)

| Thin Film No. | Thin Film Forming Method | Surface Specific Resistance (Ω·cm) | Transmittance (%) | Surface Roughness (nm) | Adhesion (%) | Raw Material Yield (%) | Remarks |
|---|---|---|---|---|---|---|---|
| 3 | Mist, Atmospheric Pressure Plasma Method | $3\times10^{-4}$ | 87 | <10 | 100 | 65 | Present Invention |
| 4 | Coating, Firing Method | $4\times10^{-4}$ | 86 | <10 | 35 | 75 | Comparative Example |
| 5 | Coating, Atmospheric Pressure Plasma Method | $9\times10^{-4}$ | 86 | <10 | 100 | 75 | Present Invention |
| 6 | Coating, Firing Method | $5\times10^{2}$ | 88 | <10 | 35 | 79 | Comparative Example |

In Thin Films 1 and 2 prepared via the thin film forming method of the present invention, a high-quality thin film was formed at a high yield. Thin Film 3 prepared via the thin film forming method of the present invention exhibited excellent performance except low raw material yield. The reason for the low raw material yield was that the amount of the thin film formed also on the opposed electrode was about as much as that formed on the targeted electrode and also the plasma space expanded.

On the other band. Thin Film 4 formed via the thin film forming method in Comparative Example exhibited poor adhesion to the substrate. The reason was that there remained residual stress in this thin film,

Further, Thin Film 5 of the present invention exhibited slightly high resistance compared to Thin Films 1 and 2, and an excellent and adequate yield similarly thereto.

And the results that Thin Film 6 exhibited no conductivity at all.

Particle size distribution charts of the droplets obtained are shown in Fig. 5. In the mist forming method used to prepare Thin Film 1, relatively small particles of an average particle diameter of 3 $\mu$m were obtained. Further, in the mist forming method used to prepare Thin Film 2, considerably small particles of an average particle diameter of 0.3 $\mu$m were obtained.

Example 2 (an example for items (22) - (28) described above)

<Preparation of Thin Film 2-1>

(Preparation of Liquid Containing the Thin Film Forming Material)

A solution containing 0.05 mol% of indium nitrate, 0.02 mol% of tin nitrate, and 0.01 mol% of silver nitrate was prepared.

(preparation of Droplets)

Using the ultrasonic sprayer 1 shown in Fig. 1, the droplets M were prepared from the liquid (the droplet raw material L) containing the thin film forming material, having been prepared, at 25°C. Herein, the frequency of the ultrasonic sprayer was 2 MHZ, the flow rate of nitrogen was 10 l/min, and the set temperature was 80 °C.

(Spraying Droplets on the Substrate, Preparation of Plasma)

Using the atmospheric pressure plasma treatment apparatus shown in Fig. 3, the droplets were sprayed on the substrate S (a polyethersulfone film) by applying a direct current electric field of + 1 kV to the feed opening. In the atmospheric pressure plasma treatment apparatus shown in Fig. 3, a high frequency power supply of a 100 kHz frequency is connected, to the electrode 22R holding the substrate S, and a high frequency power supply of a 13.56 MHz frequency is connected: to the facing rod electrode 21 and also a matching box, : functioning to match impedance, is connected between the power supply body and the rod electrode. Further, a filter is placed between the matching box and the electrode to restrict current flow from the former to the latter, or vice versa. Then, discharge was formed by introducing a mixture gas of nitrogen and 0.1% and 1% by volume of oxygen and hydrogen, respectively, based on nitrogen into the discharge space D. Since the portion exposed to plasma gas was located in the downstream of the spraying space A, the sprayed droplets was exposed to the plasma gas just after being sprayed.

Incidentally, the power density of the high frequency power supply of a 100 kHz frequency was 3 W/cm$^2$, and the power density of the high frequency power supply of a 13.56 MHz frequency was set to 5 W/cm$^2$.

This thin film forming method is one wherein liquid containing the thin film forming material is applied on a substrate and the liquid is subjected to an atmospheric pressure plasma treatment.

Herein, the electrode 22R holding the substrate S during film formation was kept warm at 150 °C.

In this manner, Thin Film 2-1 of a 100 nm film thickness was formed. Herein, the content of silver element in Thin Film 2-1 was 11.4% based on the measurement result obtained via the above method.

(Measurement of Particle Size Distribution of Droplets)

Using Spraytec series OPTICS/RTS5113 (produced by Sysmex Corp.), particle size distribution of the droplets was measured in the air at a height of 30 mm above the substrate. The particle size distribution is shown in Fig. 5(A).

<Preparation of Thin Film 2-2>

Thin Film 2-2 was prepared in the same manner as in preparation of Thin Film 2-1 except that droplets were prepared using the atomizing unit of an atomizing apparatus (a liquid Source Misted Chemical Deposition (LSMCD) apparatus, produced by Primaxx, Inc.) instead of the ultrasonic sprayer shown in Fig. 1, and the droplet output port of the apparatus was connected to the output port having been connected to the ultrasonic sprayer (not shown). Further, particle size distribution of the droplets was measured in the same manner as for Thin Film 2-1. The particle size distribution is shown in Fig. 5 (B).

This thin film forming method is one wherein liquid containing the thin film forming material is applied on a substrate and the liquid is subjected to an atmospheric pressure plasma treatment.

In this manner, Thin Film 2-2 of a 100 nm film thickness was formed. Herein, the silver element content in Thin Film 2-2 was 11.8% based on the measurement result obtained via the above method.

<Preparation of Thin Film 2-3>

Thin Film 2-3 of a 100 nm film thickness was prepared in the same manner as in preparation of Thin Film 2-1 except that the atmospheric pressure plasma treatment apparatus 30 shown in Fig. 4 was utilized instead of the atmospheric pressure plasma treatment apparatus shown in Fig. 3. The silver element content in Thin Film 2-3 was 11.2% based on the measurement result obtained via the above method.

Incidentally, the high frequency power supply of a 100 kHz frequency is connected to the roll electrode 35. The high frequency power supply of a 13.56 MHz frequency is connected to each of the cylindrical electrodes 36, facing the roll electrode, and also a matching box, functioning to match impedance, is connected between the power supply body and the electrodes. Further, a filter is placed between the matching box and the electrodes to restrict current flow from the former to the latter, or vice versa. Then, discharge was formed by introducing a mixture gas of nitrogen and 0.1% and 1% by volume of oxygen and hydrogen, respectively, based on nitrogen between the electrodes. In this treatment apparatus, the droplets 3 containing the thin film forming material are subjected to an atmospheric pressure plasma treatment to give the plasma gas 32, whereby the plasma gas is applied on the substrate to form a thin film.

Herein, the power density of the high frequency power supply of a 100 kHz frequency was 3 W/cm$^2$, and the power density of the high frequency power supply of a 13.56 MHz frequency was set to 5 W/cm$^2$.

This thin film forming method is one wherein liquid containing the thin film forming material is subjected to an atmospheric pressure plasma treatment and thereafter the liquid, having been subjected to the atmospheric pressure plasma treatment, is applied on a substrate.

The electrode 35 holding the substrate S during film formation was also kept warm at 150 °C in this case.

<Preparation of Thin Film 2-4>

Solution 1: A solution containing 0.05 mol% of indium nitrate and 0.02 mol% of tin nitrate was prepared.

Solution 2: A solution of 0.01 mol% of silver nitrate was prepared.

In the same manner as in preparation of Thin Film 2-1, an ITO thin film of a 45 nm film thickness was formed using the solution 1, and thereafter, a silver thin film was formed using the solution 2 in place of the solution 1. Further, by replacing the solution 2 back to the solution 1, an ITO thin film of a 45 nm film thickness was prepared to form Thin Film 2-4 of a laminated structue featuring the total film thickness of 100 nm. Herein, the silver content in Thin Film 4 was 27% based on the measurement result obtained via the above method.

<Preparation of Thin Film 2-5>

Using the sputtering apparatus shown in Fig. 7, Thin Film 2-5 featuring a laminated transparent conductive film was formed.

In Fig. 7, the sputtering apparatus 200 is equipped with a sputtering chamber 201 functioning to form an oxide transparent conductive thin film, and a sputtering chamber 202 functioning to form a metallic thin film. The sputtering chambers 201 and 202 are divided by a valve 232, and valves 231 and 233 are placed on each side of the sputtering chambers 201 and 202 to prevent air intrusion thereinto.

Further, the sputtering chambers 201 and 202 are connected to vacuum pumps 251 and 252 via valves 241 and 242, respectively, and vacuum exhaust from the sputtering chambers is individually preformed by initiating the vacuum pump 251 or 252 after closing each of the valves 231 - 233 and opening the valve 241 or 242.

A magnetron cathode 206 was arranged on the bottom of the sputtering chamber 201 and an ITO fired body target ($In_2O_3$ containing $SnO_2$ of 10% by weight), serving as a material for the oxide transparent conductive thin film, was placed on the magnetron cathode 206 so that the horizontal magnetic field intensity on the surface of the ITO fired body target was approximately 1000 Oe using a magnet arranged on the backside of the target. Further, a carrier 213 movable horizontally was arranged on the shieling of the sputtering chamber 201, and a substrate was fixed on the carrier 213 so that the film forming surface of the substrate was opposed parallel to the ITO fired body target.

A cathode 209 was arranged in the sputtering chamber 202 and a metallic target was placed on the cathode 209 (not shown).

A transparent substrate 212 was fixed on the carrier 213 and the sputtering chamber 201 was allowed to be in a high vaccum state via vacuum exhaust. Thereafter, Ar and $O_2$ gases, flow-controlled via a mass flow controller, were introduced up to a presure of 0.67 Pa from a nozzle 208 placed in the sputtering chamber 201 to initiate a direct current power source 271 connected to the magnetron cathode 206, whereby sputtering of the ITO fired body target was initiated.

During the sputtering, the substrate 212 was passed above the ITO target at a constant velocity to form an ITO film of the predetermined film thickness, featuring an oxide transparent conductive thin film.

Subsequently, the sputtering chamber 202 was allowed to be in a high vacuum state in advance by initiating the vacuum pump 252, and then the substrate, on which the ITO film had been formed, was transported into the sputtering chamber 202 via the valve 232. After the transportation, Ar gas, flow-controlled via a mass flow controller, was introduced up to a presure of 0.27 Pa from a nozzle 211 placed in the sputtering chamber 202 to initiate a direct current power souece 272 connected to the cathode 209, whereby sputtering of the metallic target (being a compound containing silver atoms) was initiated. At this time, the substrate 212 was passed above the metallic target at a constant velocity to form a metallic thin film (namely a silver thin film) of the predetermined film thickness on the ITO film.

Further, the substrate, on which the ITO film and the metallic thin film have been formed in this sequential order, was transported again into the sputtering chamber 201 via the valve 232 to form an ITO film on the metallic thin film. Thereafter, the formed film was taken out in the atmosphere to give Thin Film 2-5 of a 100 nm total film thickness featuring a laminated transparent conductive film, which was composed of a three-layered structure of ITO film (45 nm) /metallic thin film (10 nm)/ITO film (45nm) formed on the transparent substrate 212.

<Evaluation>

The following evaluation was carried out on each of the thin films thus obtained.

(Measurement of surface Specific Resistance)

According to JIS R 1637, surface specific resistance ($\Omega/\square$cm) was determined via a four-terminal method. Herein, measurement was performed using Loresta-GP MCP-T600 (produced by Mitsubishi Chemical Corp.).

(Measurement of Transmittance)

According to JIS R 1635, transmittance (%) was measured at a 5 nm regular intervals in the wavelength region of 400 nm - 700 nm using spectrophotometer Type 1U-4000 (produced by Hitachi, Ltd.) and the average value was calculated.

(Measurement of Centerline Average Surface Roughness Ra)

The centerline average surface roughness (nm) of each surface of the thin films was determined using a SPI 3800N prove station and a SPA 400 multi-functional unit (produced by Seiko Instruments Inc.) as an atomic force microscope (Atomic Force Microscope: AFM).

(Evaluation of Adhesion)

A cross-cut adhesion test based on JIS K 5400 was conducted. Cross-cuts of 11 lines of an interval of 1 mm perpendicular to the surface of the formed thin film were formed on the thin film surface in the transverse and longitudinal directions with a single-edged razor to form one hundred 1 mm square grids. Then, a cellophane tape (produced by Nichiban Co., Ltd.) was allowed to adhere to the cross-cut surface, and the tape was perpendicularly peeled off from one end by hand. The ratio (%) of the unpeeled film area to the area of the tape allowed to adhere to the cross-cut lines was measured, which was designated as a measure of adhesion.

(Evaluation of Uniformity in the Silver Atom-containing ITO Film)

Using 200 kV electric field emission-type TEM "JEM-2010F" (produced by JEQL Ltd,) and energy dispersive X-ray spectroscopic analyzer (EDS) "Voager" (produced by ThermoNORAN), the distribution states of the silver atoms in the cross section of each of the thin films were measured at 50 random points. The results showed that in Thin Films 2-1 - 2-3, the silver atom contents were in the range of at most $\pm$ 10% of the average silver atom content at all the measured points.

The results obtained in the above evaluations are listed in Table 2.

Table 2

| Thin Film No. | Thin Film Forming Apparatus | Structure of Thin Film | Surface Resistance ($\Omega/\square$) | Average Light Transmittance (%) | Centerline Average Surface Roughness (nm) | Adhesion (%) | Remarks |
|---|---|---|---|---|---|---|---|
| 1 | Forming Method 1 | Single-layer Film | 10 | 90 | <10 | 100 | Present Invention |
| 2 | Forming Method 1 | Single-layer Film | 6 | 91 | < 5 | 100 | Present Invention |
| 3 | Forming Method 1 | Single-layer Film | 8 | 91 | <10 | 100 | Present Invention |
| 4 | Forming Method 1 | Laminated Film | 8 | 86 | <10 | 80 | Comparative Example |
| 5 | forming Method 2 | Laminated Film | 16 | 82 | 35 | 47 | Comparative Example |
| Forming Method 1: Ultrasonic sprayer + atmospheric pressure plasma apparatus Forming Method 2: Sputtering apparatus | | | | | | | |

The results described in Table 2 clearly show that the thin film, featuring the surface resistance and average light transmittance according to the present invention, exhibits low electrical resistance and excellent light transmittance, as well as excellent adhesion to the substrate.

Further, it is possible to confirm that a high-quality thin film is formed at a high yield with respect to Thin Films 2-1 - 2-3 prepared via the thin film forming method of the present invention. On the other hand, Thin Films 2-4 and 2-5 prepared via the thin film forming methods of Comparative Examples exhibit poor light transmittance and poor adhesion to the substrate. The presumed reason is that there remains residual stress in these thin films.

The particle size distribution charts of the droplets obtained are shown in Fig. 5. In the mist forming method used to prepare Thin Film 1, relatively small particles of an average particle diameter of 3 $\mu$m were obtained. Further, in the mist forming method used to prepare Thin Film 2-2, extremely small particles of an average particle diameter of 0.3 $\mu$m were obtained.

**Claims**

1. In a thin film forming method of forming a thin film by applying an inorganic salt-containing solution on a substrate, and then by subjecting the applied solution on the substrate to an atmospheric pressure plasma treatment, the thin film forming method is **characterized by** exposing the inorganic salt-containing solution applied on the substrate to an excited gas, wherein the atmospheric pressure plasma treatment is carried out by supplying the gas to a pair of opposed electrodes at or near atmospheric pressure to excite the gas by generating a high frequency electric field between the electrodes.

2. The thin film forming method described in claim 1, wherein the gas contains nitrogen.

3. The thin film forming method described in claims 1 or 2, wherein the gas contains nitrogen and at least either oxygen or hydrogen.

4. The thin film forming method described in any one of claims 1-3, wherein droplets of the inorganic salt-containing solution are applied on a substrate.

5. The thin film forming method described in claim 4, wherein the average particle diameter of the droplets is at most 5 $\mu$m.

6. The thin film forming method described in claim 5, wherein the average particle diameter of the droplets is at most 1 $\mu$m.

7. The thin film forming method described in any one of claims 1-6, wherein the atmospheric pressure plasma treatment is conducted by placing the substrate between the opposed electrodes.

8. The thin film forming method described in any one of claims 1-7, wherein the frequency of the high frequency electric field is in the range of 800 kHz - 150 MHz.

9. The thin film forming method described in any one of claims 1-8, wherein the inorganic salt is a metallic atom-containing compound.

10. The thin film forming method described in claim 9, wherein the metallic atom-containing compound is a nitrate.

11. The thin film forming method described in any one of claims 1-10, wherein a solution of the inorganic salt contains water.

12. In a thin film forming method of forming a thin film by applying an inorganic salt-containing solution on a substrate, provided that the inorganic salt-containing solution has been subjected to an atmospheric pressure plasma treatment prior to applying on the substrate, wherein the atmospheric pressure plasma treatment is carried out by supplying a gas to a pair of opposed electrodes at or near atmospheric pressure to excite the gas by generating a high frequency electric field between the electrodes.

13. The thin film forming method described in claim 12, wherein the gas contains nitrogen.

14. The thin film forming method described in claims 12 or 13, wherein the gas contains nitrogen and at least either oxygen or hydrogen.

15. The thin film forming method described in any one of claims 12-14, wherein droplets of the inorganic salt-containing solution are applied on a substrate.

16. The thin film forming method described in claim 15, wherein the average particle diameter of the droplets is at most 5 μm.

17. The thin film forming method described in claim 16, wherein the average particle diameter of the droplets is at most 1 μm.

18. The thin film forming method described in any one of claims 12-17, wherein the atmospheric pressure plasma treatment is conducted by placing the substrate between the opposed electrodes.

19. The thin film forming method described in any one of claims 12-18, wherein the inorganic salt is a metallic atom-containing compound.

20. The thin film forming method described in claim 19, wherein the metallic atom-containing compound is a nitrate.

21. The thin film forming method described in any one of claims 12-20, wherein the inorganic salt-containing solution contains water.

22. A transparent conductive film **characterized by** containing at least one of indium, tin, and zinc, wherein the transparent conductive film is formed via the thin film forming method described in any one of claims 1-11.

23. A transparent conductive film **characterized by** containing at least one of indium, tin, and zinc, wherein the transparent conductive film is formed via the thin film forming method described in any one of claims 12-20.

24. The transparent conductive film described in claims 22 or 23, wherein indium oxide, tin element, and silver element are contained therein.

25. The transparent conductive film described in claim 24, wherein the silver element is uniformly present in an indium oxide-containing thin film.

26. The transparent conductive film described in claim 25, wherein the content of the silver element is at most 30% by weight.

27. The transparent conductive film described in claims 22 or 23, wherein the surface resistance it at most 10 Ω/□, and the average light transmittance in the wavelength region of 400 nm - 700 nm is at least 90%.

28. The transparent conductive film described in claim 27, wherein the centerline average surface roughness Ra is at most 10 nm.

## FIG. 1

## FIG. 2

## FIG. 3

## FIG. 4

## FIG. 5

( A )

( B )

# FIG. 6

# FIG. 7

## INTERNATIONAL SEARCH REPORT

| International application No. |
| --- |
| PCT/JP2006/309542 |

**A. CLASSIFICATION OF SUBJECT MATTER**
*B32B9/00*(2006.01)i, *B05D3/04*(2006.01)i, *B32B7/02*(2006.01)i, *B32B37/06* (2006.01)i, *C23C16/40*(2006.01)i, *C23C16/448*(2006.01)i, *H01B13/00* (2006.01)i

According to International Patent Classification (IPC) or to both national classification and IPC

**B. FIELDS SEARCHED**

Minimum documentation searched (classification system followed by classification symbols)
B32B1/00-43/00, B05D3/04, C08J7/00, C23C16/40-16/56, C23C26/00, C01G5/00, C01G15/00, C01G19/00, H01B1/00-1/24, H01B5/14, H01B13/00, H05H1/24

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | WO 03/086031 A  (DOWCORNING IRELAND LTD.),<br>16 October, 2003 (16.10.03),<br>Claims; Par. Nos. [0030], [0032], [0034],<br>[0038], [0039], [0041], [0045], [0062] Fig. 3<br>& EP 1493309 A          & CN 1643997 A | 1-21<br>22-28 |
| Y | JP 2004-68143 A  (Konica Minolta Holdings Kabushiki Kaisha),<br>04 March, 2004 (04.03.04),<br>Par. Nos. [0179], [0237] to [0240]<br>& EP 1371752 A2          & CN 1467302 A | 22,23,27,28 |
| Y | JP 9-245519 A  (Kojundo Chemical Laboratory Co., Ltd.),<br>19 September, 1997 (19.09.97),<br>Claims; Par. Nos. [0008], [0013]<br>(Family: none) | 24-26 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>03 August, 2006 (03.08.06) | Date of mailing of the international search report<br>15 August, 2006 (15.08.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/309542

C (Continuation). DOCUMENTS CONSIDERED TO BE RELEVANT

| Category* | Citation of document, with indication, where appropriate, of the relevant passages | Relevant to claim No. |
|---|---|---|
| A | WO 02/48428 A1 (Konica Corp.), 20 June, 2002 (20.06.02), Full text & EP 1342810 A1 | 1-28 |
| A | WO 03/85693 A1 (DOWCORNING IRELAND LTD.), 16 October, 2003 (16.10.03), Full text & EP 1493172 A1 | 1-28 |

Form PCT/ISA/210 (continuation of second sheet) (April 2005)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0248428 A
- JP 2004068143 A
- JP 2002175733 A
- JP 2005093441 A